# EUROPEAN PATENT SPECIFICATION

(11) **EP 3 169 173 B1**
(45) Date of publication and mention of the grant of the patent: **08.01.2020**
(21) Application number: 15822690.2
(22) Date of filing: 23.06.2015
(51) Int. Cl.: A41D 27/24, A41D 13/012, A43B 5/08, B29L 31/48, A41D 19/00, B29L 31/50, A63B 71/14, B29K 75/00, B29C 44/02

(54) **MOLDED WATERSPORTS AND COLD CLIMATE ACCESSORIES**
GEFORMTES WASSERSPORT- UND KALTKLIMAZUBEHÖR
ACCESSOIRES MOULÉS POUR SPORTS NAUTIQUES ET CLIMAT FROID

(30) Priority: 16.07.2014 US 201414332703
(43) Date of publication of application: 24.05.2017
(73) Proprietor: Solite Innovations LLC, Westfield, NJ 07090 (US)
(72) Inventor: MEISELMAN, James, Alexander, Westfield, NJ 07090 (US)
(74) Representative: Torti, Carlo Maria Emilio
(86) International application number: PCT/US2015/037143
(87) International publication number: WO 2016/010691

(56) References cited:
- GB-A- 2 079 137
- GB-A- 2 490 554
- US-A- 2 749 551
- US-A- 4 503 565
- US-A- 5 167 551
- US-A- 5 983 396
- US-A1- 2002 010 957
- US-A1- 2008 201 823
- US-A1- 2010 151 176
- US-A1- 2012 266 359
- US-A1- 2013 254 963
- US-B1- 7 891 116

## Description

### FIELD OF THE INVENTION

The invention refers to watersports accessories, including but not limited to handwear and footwear, where a substantial portion of the accessory is molded in a three-dimensional mold with a soft, pliable, and durable material such as EVA (Ethylene Vinyl Acetate) or PU (Polyurethane) or similar foam blends that aid in the flexibility, durability, and comfort of the accessory.

### BACKGROUND OF THE INVENTION

Historically, watersports accessories, particularly handwear and footwear, have been constructed with flat neoprene foam and rubber components which are glued, stitched, and vulcanized in an appropriate shape to form the complete product. These products, while adequate in providing flexibility, comfort, and warmth to the user, often suffer from durability problems, particularly in the seams, where water can leak into the product, making the user cold, trapping water, and making the hands and feet of the user feel heavier and be subject to increased fatigue due to the additional weight of the trapped water.

What is required are watersports accessories that are lightweight, that limit the entry of water to the user's skin, as well as limiting the absorbance of water into the accessories themselves.

Further examples of waterproof garments according to the prior art are known from US7891116.

### SUMMARY OF THE INVENTION

According to the present invention there is provided a waterproof boot according to claim 1.

Disclosed is a substantial improvement in the comfort, weight, warmth, dexterity and durability of these watersports accessories by utilizing a three-dimensional mold to produce a substantial portion of the handwear or footwear. Several different existing molding techniques can effectively be used, including but not limited to: EVA foam injection molding, EVA compression molding, or Polyurethane poured foam molding. The final product should have a generally soft durometer, preferably below 35 Asker C, for comfort and flexibility. This molded process minimizes the use of seams to manufacture the product, thereby substantially improving the durability of the product and reducing the likelihood of leaks.

In addition, this molding process allows for a variable thickness profile of the product to improve flexibility, dexterity, targeted insulation, and performance for the desired use. For example, areas that require increased flexibility, such as finger, wrist, and ankle joints, can be molded thinner than the areas that can remain thicker for more insulation. In traditional watersports accessory production, these changes in thickness require stitching together different thickness sheets of neoprene, which results in an abrupt thickness change and requires additional seams and stitching, all of which are subject to leaking, require additional manufacturing steps, and increase production cost. In contrast, the three-dimensional molding process of this invention allows a targeted tapering or increasing of thickness for increased comfort and precise control of the thickness profile of the product. This molded process also eliminates undesirable seams, which improves comfort, flexibility and durability of the product while reducing weight and production cost.

An additional benefit of the use of molded foam construction is substantially improved abrasion resistance, particularly with the injected EVA molding process. When it cures in the mold, the outer "skin" of the injected EVA is very resistant to abrasion, and unlike raw neoprene, does not require the lamination of a more durable outer material (such as nylon or polyester fabric) to provide abrasion resistance. These laminated fabrics also tend to absorb water and become heavy and cumbersome during use. Elimination of an additional outer skin or layer reduces manufacturing complexity and production cost.

Another benefit to the use of molded foam construction is the ability to mold strategic textures on the exterior surface of the product. One example is to mold a rough or high-surface-area pattern in the palm of a watersports glove to improve gripping ability. As another example, textures can be molded in the sole of a watersports boot to improve traction. Since these textures are integrated into the mold, there is substantial savings in cost versus the current methods of gluing, laminating, or printing additional grip/traction elements on neoprene hand-wear and footwear. Cosmetic textures and logos can also be integrated into the mold to improve the appearance and marketability of the product.

Another benefit to the use of molded foam construction is the ability to mold strategic textures on the inside of the product. For example, the molding of a high-friction pattern on the internal sole of a boot provides grip against the user's foot to prevent slipping/sliding of the foot inside the boot. A similar high-friction texture can be molded on the inside of a glove to prevent the fingers/hands from slipping inside the glove, and also to provide channels for air-flow to improve warmth of the product.

Another benefit to the use of molded foam construction is the hydrophobic and antibacterial properties of the material. The foam materials contemplated in the invention are closed-cell structure and are impermeable to water absorption. Neoprene accessories, particularly those with an outer lining material such as nylon or polyester, absorb water and thus become heavier and more cumbersome for the user. Molded foam boots and gloves do not absorb water, therefore are lighter/dryer during use, and also dry much quicker when not in use. Typically neoprene accessories with internal and/or external fabric lining materials take hours or even days to dry, leading to formation of bacteria and unpleasant odor. This bacterium also causes premature breakdown of the product. The surface of molded foam boots/gloves can be dried instantly with a wipe of a dry towel, increasing the longevity of the product by preventing formation of bacteria, and making the boot more comfortable/warm when putting on shortly after a previous use.

An additional element as disclosed is the integration of a more flexible cuff or gusset, such as in the wrist or ankle portion, that allows easier entry and exit of the hand or foot into the component. This cuff or gusset can be made with a high-stretch material such as neoprene, and bonded to the product with suitable wetsuit manufacturing techniques such as glue, stitch, and seam sealing.

Another element as disclosed is the use of a comfortable inner lining material, such as the elastane polyester, nylon, hollow-fiber, bamboo fiber, or stretch fleece materials that are commonly used as lining for watersports wetsuits and accessories. These materials can be bonded to the inside of the high-stretch material, and also can be bonded to the inside of the molded foam material, in both cases using hot-melt glue or other suitable bonding techniques. The melt-temperature of the hot-melt glue used must be lower than the distortion temperature of the foam to avoid damage to the molded component. This inner lining material increases warmth, comfort, and eases the process of entry and exit of the hand or foot from the product. Typically this lining material can be bonded to the inside of the molded component immediately after the component emerges from the injection mold, while the component is still hot enough to melt the hot-melt glue.

Another element as disclosed is the integration of two or more colors and/or durometers of foam simultaneously injected in the mold to enhance the appearance and/or performance of the product. One embodiment is the injection of a higher durometer and/or different color foam in the sole area of a watersports boot. This sole component provides additional protection and abrasion resistance from rough surfaces such as sand, rocks, or reef. Typically the addition of a durable sole requires additional steps in manufacturing such as gluing a separate rubber component to the sole. The multiple-injection process described above allows this process to be achieved and produces a strong, flexible, molecular bond between the two materials.

In another embodiment as disclosed, this multiple-injection process is used for cosmetic purposes such as the injection of a different color logo or other graphical element to the product.

In yet another embodiment, a firmer durometer material is injected into the arch area of the footwear to provide additional arch support for high-stress activities.

Another element as disclosed, particularly footwear, is the bonding of strategic sole materials, such as rubber, to the sole portion of the molded component to enhance traction, durability, and puncture resistance of the sole. For fly-fishing applications, commonly used materials such as felt can be bonded to the sole for additional traction on slippery rocks in rivers. These sole materials can be one piece, or multiple pieces, depending on the use and style of the product.

Another element as disclosed, particularly footwear, is the integration of an adjustable tension strap, using hook-and-loop, buckles, or other appropriate adjustment means, to provide additional security and tighter fit over the top of the foot. In one embodiment, webbing is placed under and around the heel portion of the sole, ending at fasteners such as D-rings at the inside and outside edges of the footwear. An adjustable tension strap such as hook-and-loop material is attached to one fastener, such as by stitching the strap to itself, and being of sufficient length that a user of the footwear can put on the footwear, run the free end of the strap over the top of the boot and down to the second fastener, and secure the free end of the strap at the second fastener. The adjustable-tension strap can be secured at the second fastener in a number of ways. For example, a hook-and-loop strap can be attached to itself. Other types of straps can be secured with a second fastener that is a buckle with a keeper, or with a second fastener that is a slide, etc. The placement and securing of the webbing under the heel of the footwear ensures that when the adjustable-tension strap is tightened, the webbing does not distort or stress the materials on the side of the boot. This contrasts with the prior art watersports boots that have a tension strap glued and/or stitched to the side of the boot, and when tensioned, the straps pull and distort the material on the side of the boots, causing premature deterioration of the materials and seams.

In another element as disclosed, the fasteners at either end of the webbing material are triangle-shaped rings that change the angle of the adjustable tension strap. The triangle rings orient the tension strap over the top of the foot, below the ankle, to insure comfort and retain full mobility of the ankle joint.

In another embodiment of a manufacturing method as disclosed, hot-air blowers provide a custom fit to the end user. This is particularly applicable to EVA components, which are thermo-formable at a temperature of approximately 100C/220F. There are specially made hot-air blowers for this application, but hot-air guns and hair-dryers can also be used. This process can be conducted, e.g., in a retail store where the handwear and footwear is sold. In this application, the boots and/or gloves are heated with warm air for approximately 10-15 minutes, or until the molded material becomes thermoformable. The boots/gloves are removed from the hot air source and placed on the user. After the boots/gloves cool down to body temperature, they are permanently molded to fit the user's hands and/or feet. These components can also be re-heated and re-molded with the same process multiple times.

In another embodiment as disclosed, a substantially stiffer arch support component, such as an injection molded TPU arch, is bonded to the arch area of the sole of the molded boot. This stiffer arch provides additional support and stability for activities with sustained arch strain such as stand-up paddle boarding, wakeboarding, kite boarding, and sailboarding.

In another embodiment as disclosed, a glove of the invention can be manufactured integrated with a garment covering a greater part of a user's body, such as a shirt, an apron, etc. In another embodiment, a boot of the invention can be manufactured integrated with a garment covering a greater part of a user's body, such as pants, coveralls, a wetsuit, a drysuit, etc.

Although the description of the invention primarily describes hand-wear and footwear, the same three dimensionally molded components could also be integrated into other watersports equipment as disclosed. One example is for use in strategic areas of wetsuits. Areas subject to high abrasion, such as the chest/stomach area and the knees, could integrate molded EVA foam panels for increased durability and less water absorption.

### BRIEF DESCRIPTION OF THE DRAWINGS

Preferred embodiments of the invention are described herein below with reference to the drawings wherein:
FIG. 1 illustrates a pair of gloves;
FIG. 2 illustrates the seam construction of a glove;
FIG. 3 illustrates a pair of mittens;
FIG. 4 illustrates a pair of boots; and
FIG. 5 illustrates a method of manufacture.

### DETAILED DESCRIPTION OF THE INVENTION

Disclosed are watersports garments for an extremity, including a terminal portion constructed from molded foam, such as EVA, PU, or similar foam blends, and a subterminal portion constructed from a high-stretch, water-resistant material, such as neoprene. In an alternate embodiment, the subterminal portion can be a perforated neoprene or nylon/polyester mesh that allows free flow of water in/out of the product. In another alternate embodiment, the subterminal portion can be a water-proof fabric such as nylon or a waterproof/breathable fabric such as GORE-TEX.

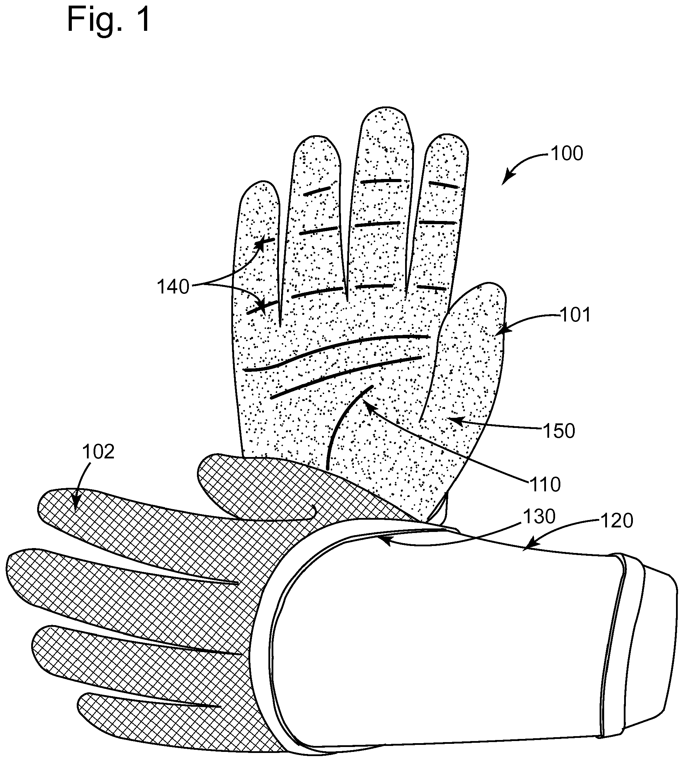

FIG. 1 illustrates one embodiment, wherein the extremity is a hand, and the garment is a pair of gloves 100. Right glove 101 is oriented to show the palm, while left glove 102 is oriented to show the back of the glove. The terminal portion is a palm portion 110, representing the front and back of the fingers of the gloves, as well as the palm. The subterminal portion is a wrist portion 120, which covers the back of the hand, excluding the fingers, and covers the front and back of the wrist.

The palm portion 110 includes flex grooves 140 molded into the front of the fingers and palm to enhance flexibility. In addition, the palm portion 110 includes texturing 150 on both the interior and exterior surfaces of the front and back of the fingers and hands, providing for an enhanced grip, i.e., so that the fingers do not slip within the gloves 100, and so that the gloves themselves do not slip when grasping an object.

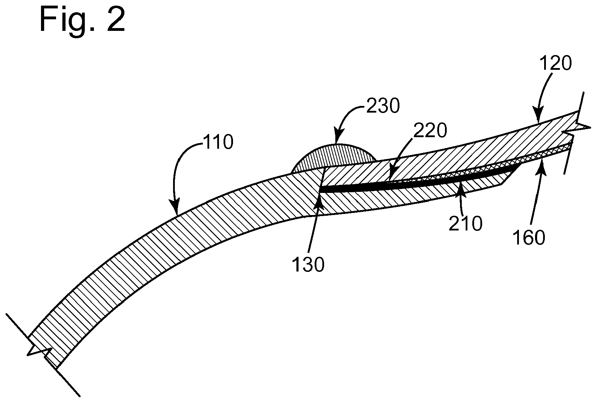

A lining fabric 160 (illustrated in FIG. 2) is provided within the interior of the wrist portion 120 of the gloves 100. Note that in another embodiment, not illustrated, a lining fabric is provided within the palm portion to provide additional warmth and/or comfort.

As FIG. 2 illustrates, the wrist portion 120 is attached to the palm portion 110 at a seam 130, using waterproof glue 210 commonly used in wetsuit construction. A thin lip runs around the entire bonding surface of the EVA components to accept the neoprene.

The neoprene of wrist portion 120 includes a skived surface 220 that cuts at an angle through lining fabric 160 through to the raw neoprene. Waterproof glue 210 is bonded to the raw neoprene of the skived surface, producing a very strong bond, and is also bonded to lining fabric 160. Lining fabric 160 is much stronger than the raw neoprene of wrist portion 120 against tearing from stretching.

An external seam sealant 230 is applied to the external surface of seam 130 between the palm portion 110 and wrist portion 120 to provide additional water-proofing and seam strength. This is a silicone- or polyurethane-based sealant that is applied with a syringe in viscous form and which cures at room temperature.

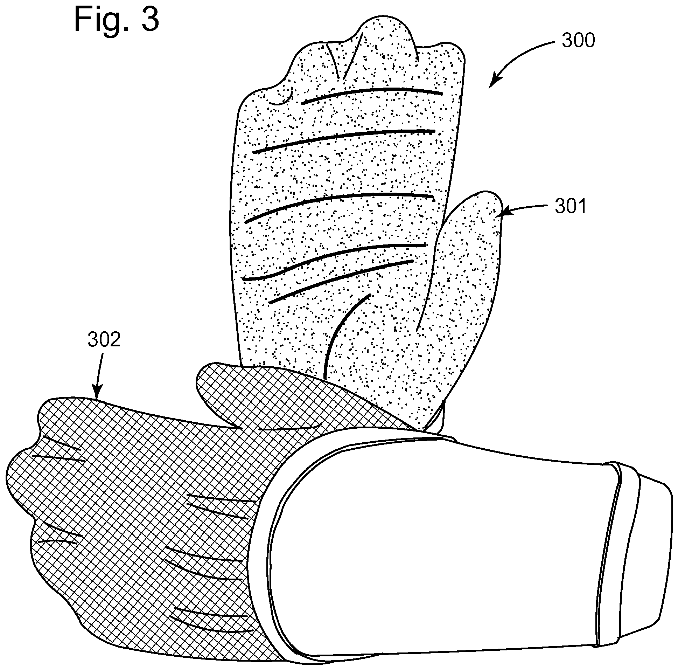

FIG. 3 illustrates a pair of mittens 300, representing another embodiment of the invention. Right glove 301 is oriented to show the palm, while left glove 302 is oriented to show the back of the glove. In this embodiment, the second through fifth fingers of each glove are joined together into a common compartment.

With mittens, fingers are able to share warmth, though the tradeoff is a loss of dexterity. In yet another embodiment, not illustrated, modified mittens provide for independent pockets for the thumb and second finger, but group together the third through fifth fingers.

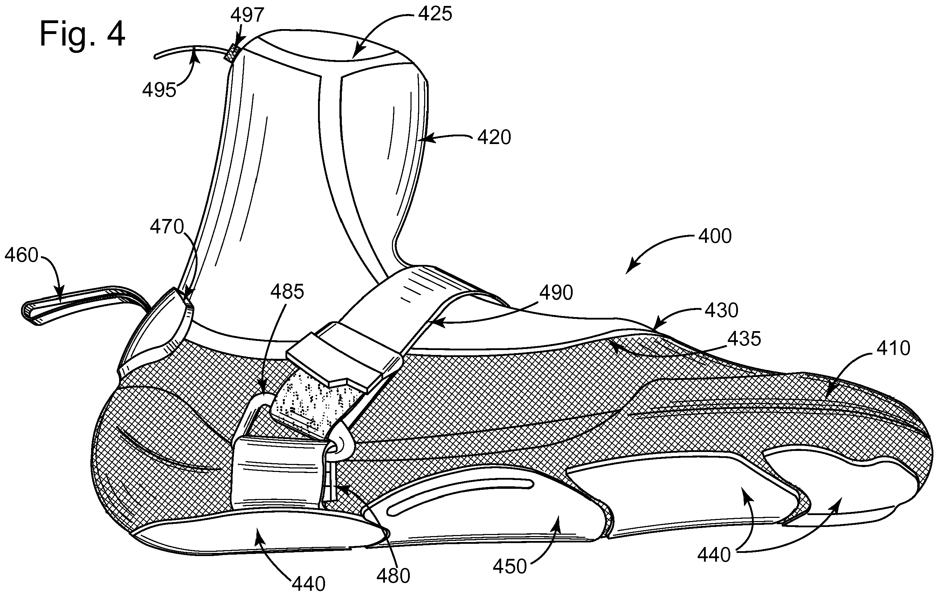

FIG. 4 illustrates another embodiment, wherein the extremity is the foot, and the garment is a boot 400. A sole portion 410 encloses the sole, sides of the user's foot, and tops of the toes. The sole portion 410 is manufactured from a molded foam, such as EVA, PU, or similar foam blends. An ankle portion 420 of the boot encloses the user's ankle and lower leg. The ankle portion 420 is manufactured from a high-stretch, water-resistant material such as neoprene.

A lining fabric 425 is provided within the interior of the ankle portion 420 of the boot 400. Note that in another embodiment, not illustrated, a lining fabric is provided within the sole portion to provide additional warmth and/or comfort. In another embodiment, not illustrated, a removable lining fabric is provided as an accessory to boot 400.

The ankle portion 420 is attached to the sole portion 410 at a seam 430, using waterproof glue. A thin lip runs around the entire bonding surface of the EVA components to accept the neoprene. At seam 430, the neoprene is cut at an angle, i.e., skived, so that there is a glue-able surface area that includes both the raw neoprene 420 and the lining fabric 425. This allows for a stronger bond (the glue bonds very well to the raw neoprene of ankle portion 420) and also a more durable resistance to tearing (the lining fabric 425 is much stronger than the raw neoprene of ankle portion 420 against tearing from stretching).

An external seam sealant 435 is applied to the external seam between the sole portion 410 and ankle portion 420 to provide additional water-proofing and seam strength. This is a silicone-or polyurethane-based sealant that is applied with a syringe in viscous form and which cures at room temperature.

In an optional embodiment, sole insert portions 440 and arch insert portion 450 are bonded to sole portion 410. Sole insert portions 440 are made of rubber. Arch insert portion 450 can either be made of rubber to match that used by sole insert portions 440, or alternatively can be made into a rigid arch support through the use of a more rigid material such as injection-molded TPU. When arch insert portion 450 is made of TPU, it can be molded with reinforced lateral and medial arch ridges to provide additional arch support.

In one embodiment, a pull-on loop 460 is provided at the heel of boot 400 to facilitate the user's donning of the boot. Pull-on loop 460 can be made of webbing or cord or the like. A reinforcement patch 470 is affixed, overlapping both the heel area of sole portion 410 and the bottom of ankle portion 420, securing pull-on loop 460 in place and reinforcing the strength of the attachment point. Reinforcement patch 470 can be made of rubber or neoprene. This area undergoes the most stress when the user puts on the boots. The additional bonding of the pull-on loop 460 under reinforcement patch 470 redirects the stress from pulling on the boot down to sole portion 410, so that the user does not overstress the neoprene of ankle portion 420 or the seam 430.

Ankle strap foundation 480 is preferably secured between the sole portion 410 and the sole insert portion 440 in the heel area of the sole portion 410. The ankle strap foundation 480 is preferably made of webbing material. In a preferred embodiment, the two ends of ankle strap foundation 480 terminate at a pair of rings 485 that are respectively, adjacent to the instep and adjacent to the outside of the user's foot. A tension strap 490 with two ends has one end permanently attached to one of the rings 485, and the second end is passed over the top of the boot and fastened by means of the other ring 485, allowing the user to adjust the tension binding the boot to his foot. In one embodiment, tension strap 490 can be made of hook-and-loop material, and the free end can pass through ring 485 and secure to itself. Other embodiments are possible, such as by using a buckle with a keeper. In a preferred embodiment, rings 385 are triangle-shaped D-rings.

In another optional embodiment, a tightener cord 495 is provided at the top of the ankle portion 420 of the boot 400, which the user can adjust and lock into place with a cord lock device 497.

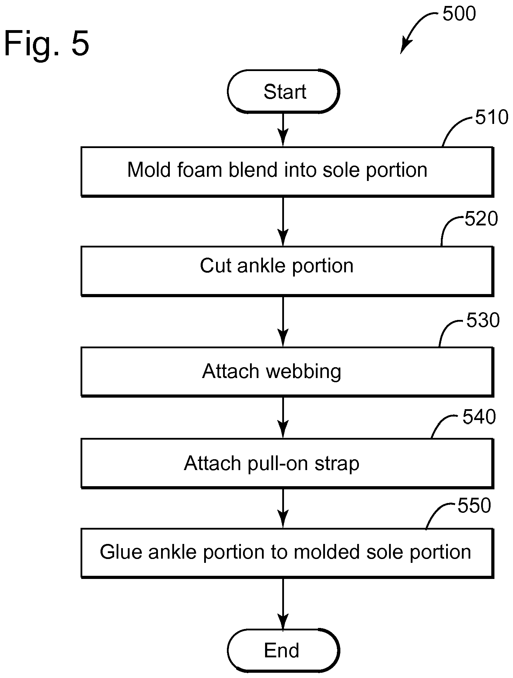

FIG. 5 illustrates a method of manufacture 500 of a boot. In step 510, a foam blend is molded in an undersized three-dimensional mold to produce a sole portion of a boot, which encloses the sole, sides of the user's foot, and tops of the toes. When the molded part is released from the mold, it expands to full size and is placed on a cooling fixture, where it remains until it has cooled down to a stable temperature and formed the correct dimensions. In one embodiment, the sole portion is provided with an inner lining material, while in another embodiment, no inner lining is provided. In the embodiment in which an inner lining material is provided, it can be bonded with hot-melt glue, and is preferably bonded immediately after the sole portion emerges from the injection mold, while the component is still hot enough to melt the hot-melt glue. In this process, the lining material is placed on the cooling fixture with the hot-melt glue facing outward. When the molded part is removed from the mold, it is placed over the cooling fixture, and the elevated temperature of the molded part melts the outward-facing glue, forming the bond between the molded part and the lining material. Once the molded part cools down to its specified shape, the melted glue also cures to complete the bond between the molded part and the lining material.

In step 520, an ankle portion of the boot is cut from the chosen flat materials with lining material already bonded to it assembled with glue and/or stitching to form the desired ankle shape, and has a lower edge skived. In an optional step 530, an ankle strap foundation, such as webbing, is placed across the heel of the sole portion, and a sole insert portion is cut and glued over the webbing and the surrounding heel of the sole portion, binding the ankle strap foundation to the sole portion. Either at this point in the manufacturing method, or else later in the method, the ends of the webbing are attached to fasteners on the right and left sides of the sole portion. An adjustable tension strap is secured to one of the fasteners, with the free end of sufficient length so that a wearer of the boot can wrap the strap over the top of the boot and down to the second fastener, and secure the ankle strap there.

In an optional step 540, a pull-on strap is secured at the heel area of the sole portion, and a reinforcement patch is glued over it and part of the surrounding area of the sole portion and the ankle portion.

In step 550, the lower edge of the ankle portion is glued to an upper edge of the sole portion, and external seam sealant is applied.

In optional step (not shown) occurring before the ankle portion is glued to the sole portion, a tightener cord is provided at the top of the ankle portion, so that the user of the boot can adjust the fit of the upper part of the ankle portion around his lower leg.

While preferred embodiments of the present invention have been illustrated and described herein, it will be apparent that such embodiments are provided by way of example only. The scope of the present invention is defined by the claims.

## Claims

1. A watersports boot (400) for a user's foot, comprising a sole portion (410) enclosing the sole, sides of the user's foot and tops of the toes and manufactured from a molded foam;
an ankle portion (420) enclosing the user's ankle and lower leg and manufactured from a high-stretch neoprene,
a lining fabric (425) provided within the interior of the ankle portion (420),
wherein the ankle portion (420) is attached to the sole portion (410) at a seam (430) using waterproof glue;
wherein a thin lip runs around the entire bonding surface of the molded foam to accept the neoprene,
wherein at seam (430) the neoprene is cut at an angle so that there is a glue-able surface area that includes both the neoprene and the lining fabric (425),
and wherein an external seam sealant (435) is applied to the external seam between the sole portion (410) and the ankle portion (420) to provide additional waterproofing and seam strength, wherein the external seam sealant (435) is a silicone or polyurethane based sealant that is applied in viscous form and cured at room temperature.

2. The watersports boot of claim 1, wherein the sole portion (410) is manufactured from a molded foam such as EVA (Ethylene Vinyl Acetate), PU (Polyurethane) or similar foam blends.

3. The watersports boot of claim 1, wherein sole insert portions (440) made of rubber and an arch insert portion (450) are bonded to the sole portion (410), said arch insert portion (45) being made of either rubber or a more rigid material such as injection molded TPU.

4. The watersports boot of claim 3, further comprising an ankle strap foundation (480) that is secured between the sole portion (410) and the sole insert portion in the heel area of the sole portion (410).

5. The watersports boot of claim 4, wherein the two ends of the ankle strap foundation (480) terminate at a pair of rings (485) that are respectively, adjacent to the instep and adjacent to the outside of the user's foot, and a tension strap (490) with two ends has one end permanently attached to one of the rings (485), and a second end is passed over the top of the boot and fastened by means of the other ring (485).

6. The watersports boot of claim 1, wherein a pull-on loop (460) is provided at the heel of the boot (400), wherein a reinforcement patch (470) is affixed, that overlaps both the heel area of the sole portion (410) and the bottom of the ankle portion (420), securing pull-on loop (460) in place.

## Patentansprüche

1. Wassersportschuh (400) für den Fuß eines Trägers, aufweisend einen Sohlenbereich (410), der die Sohle, die Seiten des Fußes des Trägers und die Zehenspitzen umgibt und der aus Formschaumstoff hergestellt ist;
einen Fußgelenkbereich (420), der das Fußgelenk des Trägers und den Unterschenkel des Trägers umgibt und der aus hochelastischem Neopren hergestellt ist,
einen Futterstoff (425), der an der Innenseite des Fußgelenkbereichs (420) vorgesehen ist,
wobei der Fußgelenkbereich (420) an einer Naht (430) an dem Sohlenbereich (410) unter Verwendung von wasserfestem Klebstoff angebracht ist;
wobei eine dünne Lippe um die gesamte Verbindungsfläche des Formschaumstoffs verläuft, um das Neopren aufzunehmen,
wobei an der Naht (430) das Neopren mit einem Winkel derart angeschnitten ist, dass ein klebefähiger Oberflächenbereich vorhanden ist, der sowohl das Neopren als auch den Futterstoff (425) einschließt, und
wobei eine äußere Nahtversiegelung (435) an der äußeren Naht zwischen dem Sohlenbereich (410) und dem Fußgelenkbereich (420) aufgetragen wird, um zusätzliche Wasserdichtheit und Nahtfestigkeit bereitzustellen, wobei die äußere Nahtversiegelung (435) eine silikon- oder polyurethanbasierte Versiegelung ist, die in viskoser Form aufgetragen wird und die bei Raumtemperatur aushärtet.

2. Wassersportschuh gemäß Anspruch 1, wobei der Sohlenbereich (410) aus Formschaumstoff wie EVA (Ethylen-Vinyl-Acetat), PU (Polyurethan) oder ähnlichen Schaummischungen hergestellt ist.

3. Wassersportschuh gemäß Anspruch 1, wobei aus Gummi hergestellte Sohleneinlageteile (440) und ein Fußgewölbeeinlageteil (450) mit dem Sohlenbereich (410) verklebt werden, und das Fußgewölbeeinlageteil (45) entweder aus Gummi oder einem festeren Material wie Spritzguss-TPU hergestellt wird.

4. Wassersportschuh gemäß Anspruch 3, weiter aufweisend eine Basis für Knöchelriemen (480), die zwischen dem Sohlenbereich (410) und dem Sohleneinlageteil im Fersenbereich des Sohlenbereichs (410) befestigt ist.

5. Wassersportschuh gemäß Anspruch 4, wobei die beiden Enden der Basis für die Knöchelriemen (480) an einem Paar von Ringen (485) enden, die sich neben dem Rist bzw. neben der Außenseite des Fußes des Trägers befinden, wobei ein Spannriemen (490) mit zwei Enden mit einem Ende permanent an einem der Ringe (485) befestigt ist und ein zweites Ende über die Oberseite des Schuhs geführt und mittels des anderen Rings (485) befestigt wird.

6. Wassersportschuh gemäß Anspruch 1, wobei eine Zugschlaufe (460) an der Ferse des Schuhs (400) vorgesehen ist, an der ein Verstärkungslappen (470) befestigt ist, der sowohl den Fersenbereich des Sohlenbereichs (410) als auch den unteren Fußgelenkbereich (420) überlappt und die Zugschlaufe (460) an ihrem Platz hält.

## Revendications

1. Botte de sports nautiques (400) pour le pied d'un utilisateur, comprenant une portion de semelle (410) entourant la semelle, des côtés du pied de l'utilisateur et des dessus des orteils et fabriquée à partir d'une mousse moulée ;
une portion de cheville (420) entourant la cheville et la jambe de l'utilisateur et fabriquée en un néoprène hautement élastique,
une étoffe de doublure (425) prévue à l'intérieur de la portion de cheville (420),
dans laquelle la portion de cheville (420) est attachée à la portion de semelle (410) au niveau d'une couture (430) à l'aide d'une colle imperméable ;
dans laquelle une lèvre fine se présente autour de la surface de liaison entière de la mousse moulée pour accepter le néoprène,
dans laquelle au niveau d'une couture (430) le néoprène est coupé en formant un angle de façon à avoir une superficie collable qui inclut à la fois le néoprène et l'étoffe de doublure (425),
et dans laquelle un matériau d'étanchéité de couture externe (435) est appliqué à la couture externe entre la portion de semelle (410) et la portion de cheville (420) pour assurer une imperméabilisation supplémentaire et une résistance de la couture, dans laquelle le matériau d'étanchéité de couture externe (435) est un matériau d'étanchéité à base de silicone ou de polyuréthane qui est appliqué sous forme visqueuse et durci à température ambiante.

2. Botte de sports nautiques selon la revendication 1, dans laquelle la portion de semelle (410) est fabriquée à partir d'une mousse moulée telle que l'EVA (éthylène-acétate de vinyle), le PU (polyuréthane) ou des mélanges de mousse similaire.

3. Botte de sports nautiques selon la revendication 1, dans laquelle les portions d'insert de semelle (440) réalisées en caoutchouc et une portion d'insert de voûte plantaire (450) sont liées à la portion de semelle (410), ladite portion d'insert de voûte plantaire (45) étant réalisée soit en caoutchouc soit en un matériau plus rigide tel que le TPU moulé par injection.

4. Botte de sports nautiques selon la revendication 3, comprenant en outre une base de bride de cheville (480) qui est assujettie entre la portion de semelle (410) et la portion d'insert de semelle dans la zone de talon de la portion de semelle (410).

5. Botte de sports nautiques selon la revendication 4, dans laquelle les deux extrémités de la base de bride de cheville (480) se terminent au niveau d'une paire d'anneaux (485) qui sont respectivement adjacents au coup de pied et adjacents à l'extérieur du pied de l'utilisateur, et une bride de tension (490) avec deux extrémités a une extrémité attachée à demeure à l'un des anneaux (485), et une seconde extrémité est passée par-dessus le dessus de la botte et fixée au moyen de l'autre anneau (485).

6. Botte de sports nautiques selon la revendication 1, dans laquelle une boucle d'enfilage (460) est prévue au niveau du talon de la botte (400), dans laquelle une pièce de renfort (470) est apposée, qui chevauche à la fois la zone de talon de la portion de semelle (410) et le dessous de la portion de cheville (420), arrimant la boucle d'enfilage (460) en place.
